# EUROPEAN PATENT APPLICATION

(11) **EP 3 910 366 A1**
(43) Date of publication of application: **17.11.2021**
(21) Application number: 20174909.0
(22) Date of filing: 15.05.2020
(51) Int. Cl.: G01S 7/00, G01S 7/40, G01S 7/497, G01S 7/52, G01S 13/86, G01S 13/87, G01S 13/931, G01S 15/86, G01S 15/87, G01S 15/931, G01S 17/86, G01S 17/87, G01S 17/931, G06K 9/00, G01S 7/295, G01S 7/41, G01S 7/48, G01S 7/539

(54) **ONLINE PERCEPTION PERFORMANCE EVALUATION FOR AUTONOMOUS AND SEMI-AUTONOMOUS VEHICLES**

(71) Applicant: Zenuity AB, 417 56 Göteborg (SE)
(72) Inventor: GYLLENHAMMAR, Magnus, 435 43 Pixbo (SE); ZANDÉN, Carl, 437 38 Lindome (SE); KHORSAND VAKILZADEH, Majid, 431 66 Mölndal (SE); FALKOVÉN, Andreas, 431 34 Mölndal (SE)
(74) Representative: Zacco Sweden AB

(57) **Abstract**

A method and system for enabling online perception performance evaluation for an ego-vehicle are disclosed. More specifically, the method comprises obtaining sensor data from a perception system of the ego-vehicle, where the sensor data comprises information about at least one object in the surrounding environment of the ego-vehicle. Further, the method comprises obtaining communication data from an external vehicle in the surrounding environment of the ego-vehicle, where obtained communication data comprises at least one physical attribute of the external vehicle. Moreover, the method comprises comparing the obtained at least one physical attribute of the external vehicle with the information about at least one object in order to find an object of the at least one object that matches the at least one physical attribute. Then, if a match for the at least one physical attribute is found, the method further comprises obtaining world view data indicative of the world view of the external vehicle, forming a common reference system between the ego-vehicle and the external vehicle, and comparing the obtained sensor data with the world view data of the external vehicle in order to evaluate a performance of the perception system of the ego-vehicle.

## Description

### TECHNICAL FIELD

The present disclosure relates to autonomous and semi-autonomous vehicles, and more specifically, the present disclosure relates to methods and systems for enabling online perception performance evaluation for such vehicles.

### BACKGROUND ART

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. To function as intended, ADAS may rely on inputs from multiple data sources, such as e.g. automotive imaging, LIDAR, radar, image processing, computer vision, and/or in-car networking.

Today, development is ongoing in both ADAS as well as Autonomous Driving (AD), within a number of different technical areas within these fields. ADAS and AD may be generally referred to under the common term Automated Driving Systems (ADS) having different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

ADS features as described above are, however, bound to be required to function with a high integrity to provide sufficiently low risk for the vehicle occupant(s) as well as their surrounding environments. Ensuring that the risk is sufficiently low may require intractable amounts of data for statistical proofs, and would, according to an example, take e.g. approximately a hundred vehicles to drive continuously for five centuries, to acquire. There are several approaches to minimize the risk of the ADS features before they are launched onto public roads. However, on top of this, it is generally believed that the ADS features should be monitored once in the field, in order to ensure that they adhere to required safety levels.

It is however difficult to conduct this monitoring of the performance of the ADS relying solely on the production sensors also used to achieve the dynamic driving task of the ADS. If the sensors are systematically performing sub-optimally (e.g. systematic errors due to need of recalibration or physical degradation over time) it can be very challenging to detect. The problem could indeed be detected once there are actual accidents or near accidents, but by then it is arguably already too late, and something which one would want to avoid at all costs as such incidents might thorn the public confidence in our technology.

Thus, there is a need for new solutions in the art, and in particular to new solutions for mitigating the problems associated with sub-optimally performing sensors of autonomous vehicles.

### SUMMARY

It is therefore an object of the present disclosure to provide a method for enabling online perception performance evaluation for an ego-vehicle, a computer-readable storage medium, a corresponding system, and a vehicle comprising such a system, which alleviate all or at least some of the above discussed problems.

Further, it is an object of the present disclosure to provide a solution for identification of specific entities/bodies in relation to where they are judged to be with respect to the world view of the ego-vehicle in order to facilitate online perception performance evaluation. More specifically, it is an object of the present disclosure to enable a vehicle to establish a common reference frame with another vehicle in order to enable/facilitate the perception performance evaluation.

These objects are achieved by means of a method for enabling online perception performance evaluation for an ego-vehicle, a computer-readable storage medium, a corresponding system, and a vehicle comprising such a system as defined in the appended claims. The term exemplary is in the present context to be understood as serving as an instance, example or illustration.

According to a first aspect of the present disclosure, there is provided a method for enabling online perception performance evaluation for an ego-vehicle. The method comprises obtaining sensor data from a perception system of the ego-vehicle, where the sensor data comprises information about at least one object in the surrounding environment of the ego-vehicle. Further, the method comprises obtaining communication data from an external vehicle in the surrounding environment of the ego-vehicle, where obtained communication data comprises at least one physical attribute of the external vehicle. Moreover, the method comprises comparing the obtained at least one physical attribute of the external vehicle with the information about at least one object in order to find an object of the at least one object that matches the at least one physical attribute. Then, if a match for the at least one physical attribute is found, the method further comprises obtaining world view data indicative of the world view of the external vehicle, forming a common reference system between the ego-vehicle and the external vehicle, and comparing the obtained sensor data with the world view data of the external vehicle in order to evaluate a performance of the perception system of the ego-vehicle.

With an increasing number of Automated Driving Systems (ADSs) on the road it will be more and more likely to encounter other ADSs while driving. By communicating with these other ADSs it is possible to make an online performance evaluation of the perception and localisation system by comparing the outputs (as in current world model/view) from the other ADS with the output from the own ADS. An example of such an online perception performance evaluation is for example disclosed in the currently pending European Patent Application No. EP20153214.0 titled "PERCEPTION PERFORMANCE EVALUATION OF A VEHICLE ADAS OR ADS" by the applicant of the present application, Zenuity AB, of Gothenburg, Sweden, incorporated in its entirety herein by reference.

However, for such a solution to work it is integral that each ADS is able to establish a common reference system/frame with the external vehicle that it is communicating with. If no common reference frame can be established, it may not be possible to generate any meaningful information from a comparison of the sensory outputs of the two vehicles.

In more detail, identification of the external vehicle with respect to the ego-vehicle's "view" of the world around itself (world view) is one possible way of establishing a common system of reference. Before one can fully rely in high accuracy global positioning this is an efficient way to create a common system of reference that may be necessary to be able to align and compare the outputs from one or more ADSs. The present inventors realized that it is not merely sufficient to identify that the other vehicle is present in the vicinity of the ego-vehicle but that is advantageous, and potentially even crucial, to be aware of the exact object that the external vehicle corresponds to in the ego-vehicle's world view. This also includes a case where the ego-vehicle only "sees" one other vehicle since it cannot simply be inferred that this vehicle is the one that it is communicating with, even if it is highly likely. In more complex situations with additional other vehicles there is an even greater needs to be able to identify which specific vehicle with which the ADS is communicating.

Accordingly, it is hereby provided a solution where a common reference system/frame is identified by receiving both the sensor data as well as a set of physical attributes of the external vehicle. This information is subsequently matched to the own vehicle's world view and in the case where the other vehicle is viewable the received physical attributes can be used to find a unique match.

According to a second aspect of the present disclosure, there is provided a (non-transitory) computer-readable storage medium storing one or more programs configured to be executed by one or more processors of a vehicle control system, the one or more programs comprising instructions for performing the method according to any one of the embodiments disclosed herein. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present disclosure there is provided a system for enabling online perception performance evaluation for an ego-vehicle. The system comprises control circuitry configured to obtain sensor data from a perception system of the ego-vehicle, where the sensor data comprises information about at least one object in the surrounding environment of the ego-vehicle. Further, the control circuitry is configured to obtain communication data from an external vehicle located in the surrounding environment of the ego-vehicle, where the obtained communication data comprises at least one physical attribute of the external vehicle. The control circuitry is further configured to compare the obtained at least one physical attribute of the external vehicle with the information about at least one object in order to find an object of the at least one object that matches the at least one physical attribute. Then, if a match for the at least one physical attribute is found the control circuitry is configured to obtain world view data indicative of the world view of the external vehicle, form a common reference system between the ego-vehicle and the external vehicle, and compare the obtained sensor data with the world view data of the external vehicle in order to evaluate a performance of the perception system of the ego-vehicle. With this aspect of the disclosure, similar advantages and preferred features are present as in the previously discussed first aspect of the disclosure.

Further, according to a fourth aspect of the present disclosure, there is provided a vehicle comprising a perception system having at least one sensor device for monitoring a surrounding environment of the vehicle. The vehicle further comprises a communication system for sending and receiving wireless data packets to and from an external transceiver via one or more antennas, and a system for enabling online perception performance evaluation according to any one of the embodiments disclosed herein. With this aspect of the disclosure, similar advantages and preferred features are present as in the previously discussed first aspect of the disclosure.

Further embodiments of the disclosure are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present disclosure will in the following be further clarified with reference to the embodiments described hereinafter.

### BRIEF DESCRIPTION OF DRAWINGS

Further objects, features and advantages of embodiments of the disclosure will appear from the following detailed description, reference being made to the accompanying drawings, in which:
Fig. 1 is a schematic flow chart representation of a method for enabling online perception performance evaluation for an ego-vehicle in accordance with an embodiment of the disclosure.
Figs. 2a - 2e are a series of schematic top view illustrations of a vehicle comprising a system for enabling online perception performance evaluation in accordance with an embodiment of the disclosure.
Fig. 3 is a schematic side view illustration of a vehicle comprising a system for enabling online perception performance evaluation in accordance with an embodiment of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

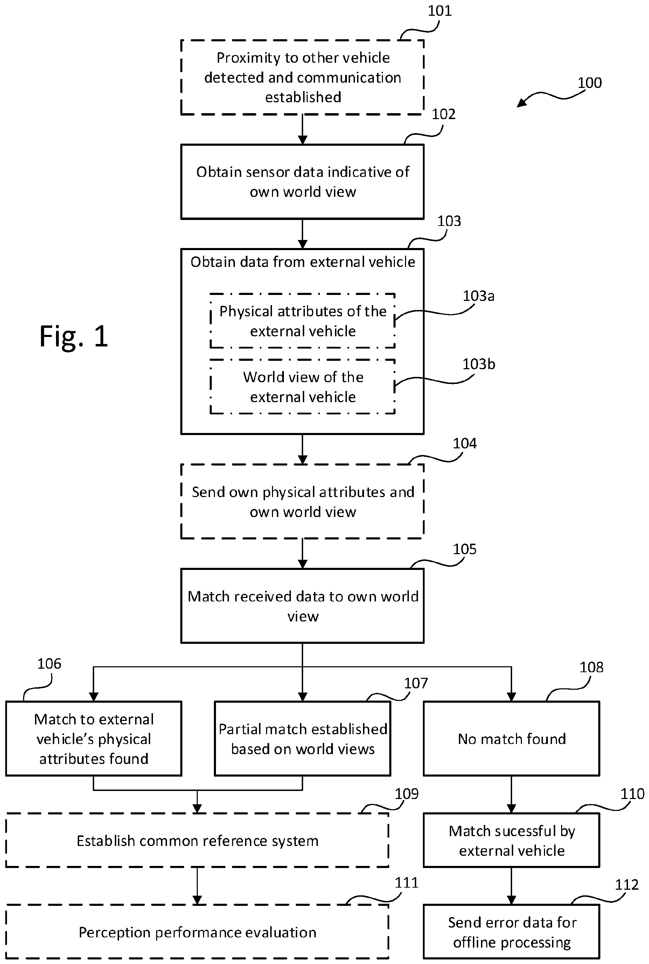

Fig. 1 is a schematic flow chart representation of a method 100 for enabling online perception performance evaluation for a vehicle, such as e.g. a car, a bus, a truck, or the like. In more detail, the method 100 provides a means for setting up and executing an online performance evaluation of the perception and localisation system of a vehicle by comparing the outputs of the own vehicle (i.e. ego-vehicle) with the outputs of an external vehicle located in the surrounding environment of the ego-vehicle. The outputs may be construed as a current "world-view" of the corresponding vehicle, i.e. sensor data from a perception system, positioning data from a localization system, and so forth.

Moving on, the method 100 may comprise a step of detecting 101 a proximity to another vehicle. For example, the vehicles may be configured to broadcast a RF (radio frequency) signal, whereby two vehicles may reciprocally receive the other vehicle's broadcast signal and proximity may be concluded. Subsequently, a communication path can be established between the two vehicles. Alternatively, the vehicles may be connected to a common central fleet management system (e.g. to a common "cloud" system) that is configured to monitor the positions of the vehicles and to transmit a signal to the vehicles when they are in proximity of each other in order to initiate communication between the vehicles (either directly or via the central system).

Further, the method 100 comprises obtaining 102 sensor data from a perception of the ego-vehicle. The sensor data comprises information about one or more objects located in the surrounding environment of the vehicle. In other words, the method 100 comprises establishing/determining a world view of the ego-vehicle, which may be construed as a perceived model of the ego-vehicle's surroundings. The obtaining 102 of the sensor data may be accomplished in any arbitrary - e.g. known - manner. Moreover, the sensor data may refer to any data of relevance for the ADS of the ego-vehicle. The sensor data may accordingly be indicative of the perceptions of surroundings of the ego-vehicle, and may be derived from the output data from one or more sensors of the ego-vehicle's perception system, internal processing of the output data in order to achieve sensor fusion, tracking, etc. Moreover, the method 100 may further comprise obtaining digital map data such as e.g. HD map data. It should be noted that the sensor data may be derived from the perception system even should the ego-vehicle during said obtaining 102 and/or during production of the sensor data have been at least partly controlled by a vehicle driver. In other words, the sensor data may be obtained 102 at all times, and is not dependent on the ADS feature being influential of or fully controlling the vehicle. The term obtaining is herein to be interpreted broadly and encompasses receiving, retrieving, collecting, acquiring, and so forth.

Thus, the phrase "obtaining sensor data from a perception system" may for example refer to "deriving perception data", "deriving ego-vehicle world view data", "deriving a view of the surroundings of the ego-vehicle", or "deriving a world view of the ego-vehicle". In reference to the latter, the phrase may further refer to "deriving a world view with support from internal processing of the ADS of the ego-vehicle and/or a digital map such as HD map" and/or "deriving a world view of global and/or HD map coordinates with support from a HD map". A perception system is in the present context to be understood as a system responsible for acquiring raw sensor data from on sensors such as cameras, LIDARs and RADARs, ultrasonic sensors, and converting this raw data into scene understanding. Naturally, the sensor data may be received directly from one or more suitable sensors (such as e.g. cameras, LIDAR sensors, radars, ultrasonic sensors, etc.).

Further, the method 100 comprises obtaining 103 communication data from an external vehicle in the surrounding environment of the ego-vehicle. The obtained 103 communication data comprises (at least) information about at least one physical attribute 103a of the external vehicle. The one or more physical attributes 103a of the external vehicle may for example be a colour of the external vehicle, a maker of the external vehicle, a model of the external vehicle, a license plate number or identifier of the external vehicle, and/or a geographical position (e.g. GPS position) of the external vehicle. In otherwords, once the communication between the ego-vehicle and the external vehicle has been established 101, the external vehicle sends one or more identifiers of itself in the form of one or more physical attributes that are detectable by the perception system of the ego-vehicle.

In some embodiments, the method 100 may further comprise a reciprocal sharing of physical attributes and world views. Accordingly, the method 100 may further comprise sending 104 one or more physical attributes of the ego-vehicle to the external vehicle, and sending the sensor data obtained 102 from the perception system of the ego-vehicle to the external vehicle. In more detail, the method 100 may further comprise sending data indicative of at least one physical attribute of the ego-vehicle to the external vehicle. Further, the method 100 may comprise obtaining an external request signal from the external vehicle, the external request signal being indicative of a request to transmit the sensor data to the external vehicle, and sending the sensor data to the external vehicle after the external request signal is obtained.

Moving on, the method 100 further comprises a step of matching 105 the received physical attributes of the external vehicle with the ego-vehicle's "world view", i.e. matching 105 the physical attributes 103a of the external vehicle to the one or more objects perceived in the surrounding environment of the ego-vehicle. Stated differently, the method 100 comprises comparing 105 the obtained 103 at least one physical attribute 103a of the external vehicle with the information about at least one object in order to find an object of the at least one object that matches the at least one physical attribute 103a.

In some embodiments the step of comparing 105 the obtained at least one physical attribute of the external vehicle with the information about at least one object comprises comparing the obtained 103 at least one physical attribute 103a of the external vehicle with the information about at least one object against a predefined confidence threshold, and selecting the object of the at least one object having one or more physical attributes matching the obtained at least one physical attribute above the predefined confidence threshold.

Then, if a match for the at least one physical attribute 103a is found 106, the method further comprises obtaining world view data 103b indicative of the world view of the external vehicle. The world view data 103b may for example be comprised in the obtained 103 communication data together with the one or more physical attributes 103a of the external vehicle. In more detail, the physical attribute(s) of the external vehicle may be in the form of a header or metadata of the communication data, while the "world view" of the external vehicle may form the body or payload of the obtained 103 communication data. Accordingly, the ego-vehicle may use the header or metadata of the communication data in order to attempt to match the physical attribute(s) 103a of the external vehicle, and if a match is found, process the associated world view data 103b, otherwise the world view data 103b may be discarded or rejected.

Alternatively, the world view data 103b of the external vehicle may be requested by the ego-vehicle once a match to the external vehicle's physical attributes 103a is found. Accordingly, in that scenario, the ego-vehicle would obtain two data sets from the external vehicle, a first data set comprising the one or more physical attributes 103a of the external vehicle, and then request and obtained a second data set comprising the world view 103b of the external vehicle. Thus, in some embodiments, the method 100 comprises sending a request signal to the external vehicle, the request signal being indicative of a request for the world view data of the external vehicle, and receiving the world view data from the external vehicle after the request signal has been sent.

Further, the method 100 comprises forming or establishing 109 a common reference system between the ego-vehicle and the external vehicle, and comparing the obtained sensor data with the world view data of the external vehicle in order to evaluate 111 a performance of the ego-vehicle's perception system. The processes of matching data sets may for example be performed by data association in sensor fusion as readily understood by the skilled person in the art. An example of such a perception performance evaluation is disclosed in the currently pending European Patent Application No. EP20153214.0 titled "PERCEPTION PERFORMANCE EVALUATION OF A VEHICLE ADAS OR ADS" by the applicant of the present application, Zenuity AB, of Gothenburg, Sweden, incorporated in its entirety herein by reference.

However, if no match for the one or more physical attributes 103a of the external vehicle is found in the ego-vehicle's sensor data, the method 100 may comprise a step of comparing the obtained world view of the external vehicle with the information about at least one object in order to establish 107 at least a partial match between a world view of the ego-vehicle and the world view of the external vehicle. Thus, if no match for the physical attribute(s) of the external vehicle can be found, and if the world view data of the external vehicle is obtained any detected (by the external vehicle) physical attributes of the surrounding objects can be included in the world view data in addition to their estimated positions and states. This would allow matching of the other objects (referred to as "partial match"), in order to create a common system of reference based on these. Thus, if a partial match is established 107, the method further comprises forming 109 a common reference system between the ego-vehicle and the external vehicle (or more specifically between the ego-vehicle's world view and the external vehicle's world view), and comparing the obtained sensor data with the world view data of the external vehicle in order to evaluate 111 a performance of the perception system of the ego-vehicle.

However, if no match between the obtained 103 physical attribute(s) 103a of the external vehicle and with the one or more objects in the ego-vehicle's world view can be found, and if no partial match can be established, the method may comprise a step of obtaining 110 a confirmation signal from the external vehicle. The confirmation signal is indicative of a successful match made by the external vehicle. In other words, the confirmation signal is indicative of that the external vehicle was able to establish a common reference system with the ego-vehicle based on the transmitted 104 ego-vehicle's physical attribute(s) and the ego-vehicle's world view data. Accordingly, upon obtaining the confirmation signal from the external vehicle, the method may comprise determining that there is an error in one or more of the ego-vehicle's internal systems and sending 112 error data to a remote entity (e.g. the common fleet management system) for offline processing.

However, in some embodiments, the method 100 may further comprise analysing the obtained 103 world view 103b of the external vehicle by comparing a field of view of the ego-vehicle with the obtained world view 103b in order to determine if the external vehicle is within the field of view of the ego-vehicle. Accordingly, the step of sending 112 error data may only be sent if the analysis concludes that the external vehicle is/was within the field of view of the ego-vehicle. This reduces the risk of sending unnecessary data to the remote entity, such as in cases where the ego-vehicle could not reasonably detect/observe the external vehicle.

Executable instructions for performing these functions are, optionally, included in a non-transitory computer-readable storage medium or other computer program product configured for execution by one or more processors.

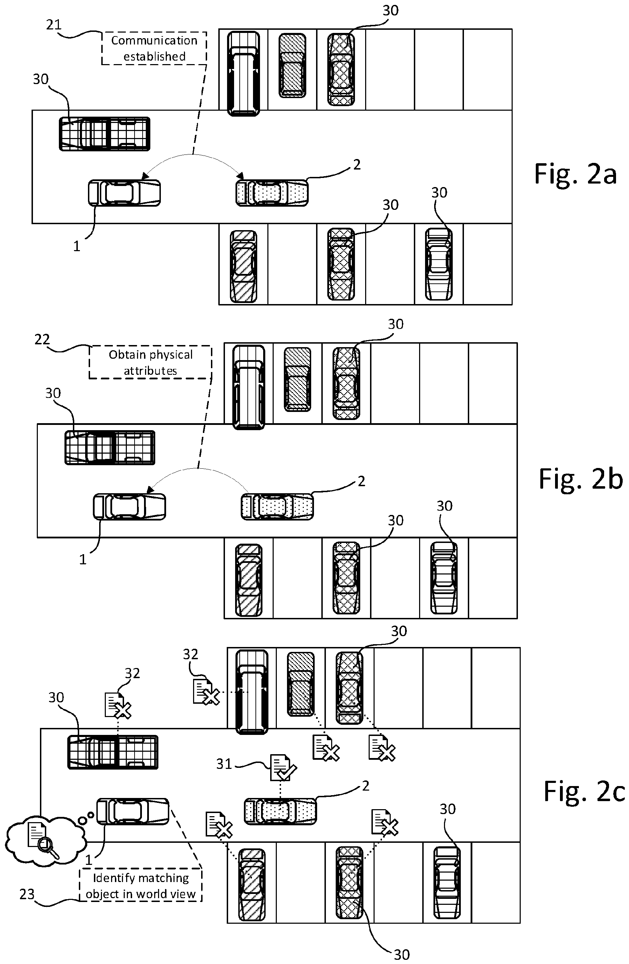

Figs. 2a - 2e show a series of schematic top view illustrations of a vehicle 1 comprising a system for enabling online perception performance evaluation in accordance with an embodiment of the disclosure. More specifically, Figs. 2a - 2e show a series of top view illustrations of a parking lot environment with a vehicle 1 (referred to as ego-vehicle in the following) has a system for enabling online perception performance evaluation. The series of illustrations serve to further elucidate the above-described process for enabling online perception performance evaluation.

Accordingly, Fig. 2a is a schematic top view illustration of an ego-vehicle 1 located in a parking area in which an external vehicle 2 is located. Moreover, the depicted scenario has a plurality of vehicles in the surrounding environment of the ego-vehicle 1. The ego-vehicle 1 and the external vehicle 2 are provided with a system for enabling online perception performance evaluation in accordance with an embodiment of the present disclosure. The following description will however be mainly from the ego-vehicle's 1 perspective.

Further, the ego-vehicle 1 may be connected to external network(s) via for instance a wireless link (e.g. for detecting proximity to another ADS-equipped vehicle). Accordingly, the same or some other wireless link may be used to communicate with other vehicles 2 in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

At a first point in time, a proximity to another ADS-equipped vehicle (external vehicle) 2 is detected by the ego-vehicle 1. As mentioned, this may for example be realized by detecting a broadcast signal transmitted by the external vehicle 2, or by receiving a signal from a central fleet management system connected to both vehicles. The fleet management system may be configured to monitor and track the position of each vehicle 1, 2 and upon detecting that the two vehicles 1, 2 are sufficiently close to each other to execute the above described methods, transmit a signal to both vehicles 1, 2 in order to initiate communication. Thus, in a first step, a proximity to an external vehicle 2 is detected and communication between the ego-vehicle 1 and the external vehicle 2 is established 21. It should be noted that the term "external" vehicle 2 should be understood as "a vehicle other than the ego-vehicle" that is capable of transmitting communication in order to enable the ego-vehicle 1 to execute the methods or processes disclosed herein. Thus, in some embodiments the "external vehicle" is another vehicle in the same "ADS fleet" as the ego-vehicle 1.

The ego-vehicle 1 has a perception system comprising one or more vehicle-mounted sensors configured to monitor the surrounding environment of the vehicle. Thus, the system of the ego-vehicle is configured to obtain sensor data from the perception system. The sensor data comprises information about at least one object 2, 30 in the surrounding environment of the ego-vehicle 1.

Further, Fig. 2b illustrates a step following the first point in time, where the ego-vehicle 1 obtains 22 communication data from the external vehicle 2. The communication data comprises at least one physical attribute of the external vehicle 2. Further, Fig. 2c illustrates a subsequent step where the ego-vehicle 1 attempts to identify an object in its world view that matches 31 the obtained one or more physical attributes of the external vehicle 2. More specifically, the obtained at least one physical attribute of the external vehicle is compared with the sensor data obtained from the perception system of the ego-vehicle 1. As indicated, the objects 2, 30 in the surrounding environment are compared with the identified physical attributes of the objects 2, 30 in the ego-vehicle's world view, in order to confirm a match 31 or a "non-match" 32.

Furthermore, in some embodiments, the search for a match between the obtained physical attribute(s) of the external vehicle 2 and the one or more objects 30 identified in the ego-vehicle's 1 sensor data may be relative to a predefined confidence threshold. More specifically, the step of comparing the obtained at least one physical attribute of the external vehicle 2 with the information about at least one object 2, 30 may comprise comparing the obtained at least one physical attribute of the external vehicle with the information about at least one object 2, 30 against a predefined confidence threshold. Then, the object of the at least one object 2, 30 having one or more physical attributes matching the obtained at least one physical attribute above the predefined confidence threshold is selected or confirmed 31. The objects 2, 30 having physical attributes that are associated with a confidence level below the threshold are classified 32 accordingly.

For example, assuming that the obtained physical attributes comprises a colour of the external vehicle 2, a maker of the external vehicle 2, a model of the external vehicle 2, and a license plate number of the external vehicle 2. Then, an object 2, 30 (i.e. other vehicle) having a fully matching license plate number may be considered to be a high-confidence level match, while an object (i.e. other vehicle) having the same colour may be considered to be a low-confidence level match. Accordingly, in some cases the license plate number may not be visible/detectable by the ego-vehicle's perception system, but if an object 30 matching the colour, make, and model is found the combined confidence level may exceed the confidence level threshold. Moreover, if two or more objects having the same confidence level are found, then the ego-vehicle 1 may request the world-view data in order to attempt to find a "partial match", or conclude that no match can be found.

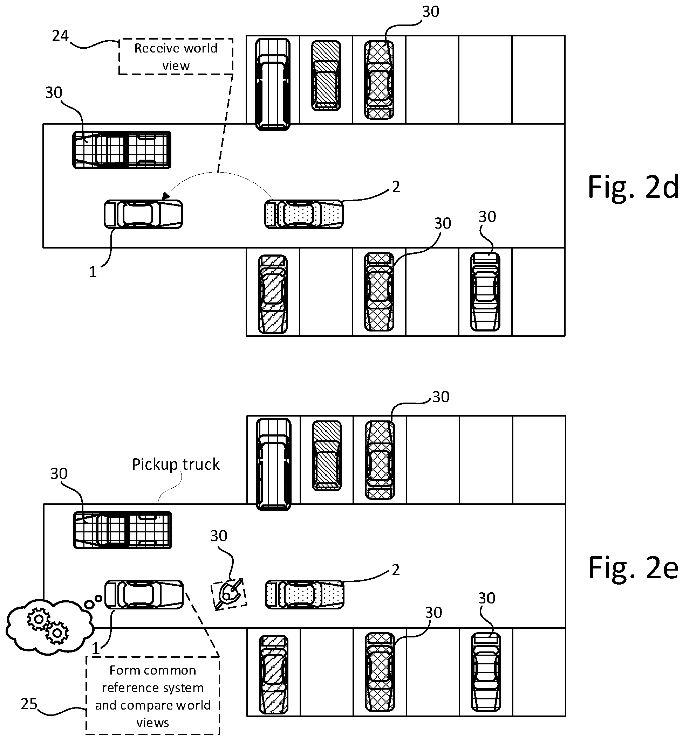

In some embodiments, once a match 31 is found, the ego-vehicle 1 sends a request signal to the external vehicle 2, where the request signal is indicative of a request for the "world view" of the external vehicle. After the request signal is received and processed by the external vehicle 2, the ego-vehicle 1 receives 24 the world view data form the external vehicle 2, as illustrated in Fig. 2d. Alternatively, the world view data of the external vehicle 2 was comprised in the communication data obtained previously. The world view data may for example comprise sensor data (raw sensor data, object level data, or any other suitable format) indicative of the external vehicle's 2 "world view". Moreover, the world view data may comprise a geographical position of the external vehicle 2 originating from e.g. a Global Navigation Satellite System (GNSS) of the external vehicle 2.

Further, as illustrated in Fig. 2e, the ego-vehicle 1 forms a common reference system between the ego-vehicle 1 and the external vehicle 2, and compares the obtained sensor data (i.e. the world view of the ego-vehicle 1) with the world view data of the external vehicle 2 in order to evaluate a performance of the perception system of the ego-vehicle 1. In more detail, since the ego-vehicle 1 knows where the external vehicle 2 is located relative to the ego-vehicle 2 it is possible to cross-reference the sensor data of the ego-vehicle 1 with the sensor data of the external vehicle 1, i.e. to compare the two world views in order to identify potential errors in the ego-vehicle's 1 sensor data. It should be noted, that in some embodiments, the ego-vehicle 1 reciprocally shares its own physical attributes and world view to the external vehicle 2 in order to enable a corresponding online perception performance evaluation for the external vehicle 2.

Accordingly, the process disclosed herein provides an effective framework to enable online perception performance evaluations for autonomous and semi-autonomous vehicles 1, 2. In contrast, without knowing the origin of an obtained "external" world view, it will be difficult, if not impossible to establish a common reference system which is important if one is to effectively evaluate the performance of a vehicle's perception system.

With that said, in some scenarios it may not be possible to find a match in the surrounding environment of the ego-vehicle 1 for the one or more obtained physical attributes of the external vehicle 2. This may for example be the case if the external vehicle 2 is fully or partly obscured by another object relative to the ego-vehicle 1, such as e.g. a cyclist as indicated in Fig. 2e. Accordingly, the object corresponding to the external vehicle 2 in the ego-vehicle's world view may then only be associated with a "match" below a predefined confidence threshold to the obtained physical attribute(s).

However, in order to mitigate such problems, the ego-vehicle 1 may, as a secondary step, compare the obtained world view data of the external vehicle 2 with the ego-vehicle's sensor data (without finding a match to obtained physical attributes), in order to establish at least a "partial match" between a world view of the ego-vehicle 1 and the world view of the external vehicle 2. Then, if a "partial match" is established, one can form 25 a common reference system between the ego-vehicle 1 and the external vehicle 2, and further compare the obtained sensor data with the world view data of the external vehicle 2 in order to evaluate a performance of the perception system of the ego-vehicle 1.

In other words, even if no match for the obtained one or more physical attributes can be found, the world views of the ego-vehicle 1 and the external vehicle may be compared in order to find one or more common objects, and from there establish a common reference system. For example, the external vehicle's world view data may indicate a presence of a pickup truck, which is present in the ego-vehicle's 1 world view (e.g. to the left of the ego-vehicle 1 in Fig. 2e). Then based on this common object 30, the common reference system can be established. The process of finding a partial match and establishing a common reference system requires more computational resources than finding a match for the obtained physical attribute(s), wherefore it is initiated as a secondary step if no match for the obtained physical attribute(s) is found. However, in some embodiments the process of finding a partial match may be performed in parallel with the step of finding a match for the obtained physical attribute(s), assuming that the sensor data of the external vehicle 2 is available.

As mentioned in the foregoing, the ego-vehicle 1 may reciprocally share its own physical attributes and sensor data (i.e. world view) to the external vehicle 2. This enables for an additional input to the perception performance evaluation in case no match (with the external vehicle's physical attributes) or partial match can be found by the ego-vehicle. In more detail, the external vehicle 2 may transmit a confirmation signal to the ego-vehicle 1. The confirmation signal is indicative of an identification of the ego-vehicle 2 made by the external vehicle 2. Thus, the ego-vehicle 1 may then conclude that there is a potential problem with its perception system (hardware or software), and transmit (error) data to a central entity for offline processing. The (error) data preferably comprises information about the obtained at least one physical attribute of the external vehicle 2, a geographical position of the ego-vehicle, and the sensor data of the ego-vehicle. In some embodiments, the ego-vehicle 1 may analyse the obtained world view of the external vehicle 2 by comparing a field of view of the ego-vehicle 1 with the obtained world view in order to determine if the external vehicle 2 is within the field of view of the ego-vehicle 1. Accordingly, the step of sending error data is only sent if the analysis concludes that the external vehicle 2 is/was within the field of view of the ego-vehicle 1. This reduces the risk of sending unnecessary data to the remote entity, such as in cases where the ego-vehicle 1 could not reasonably detect/observe the external vehicle 2.

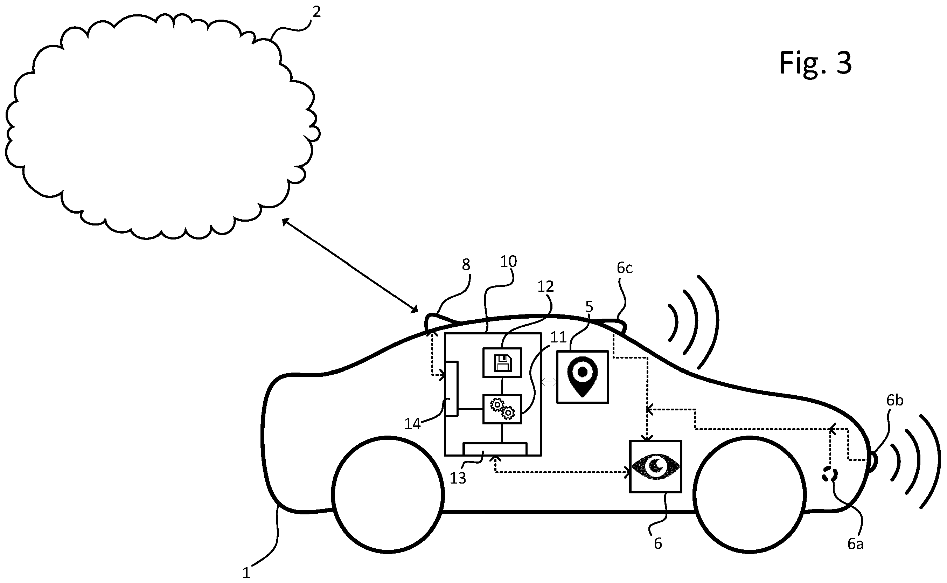

Further, Fig. 3 is a schematic side view of a vehicle 1 comprising a control system 10 for enabling online perception performance evaluation of the vehicle 1. The system 10 comprises control circuitry configured to perform the techniques described herein. The vehicle 1 further comprises a perception system 6 and a localization system 5. A perception system 6 is in the present context to be understood as a system responsible for acquiring raw sensor data from on-board sensors 6a, 6b, 6c such as cameras, LIDARs and RADARs, ultrasonic sensors, and converting this raw data into scene understanding. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy.

In more detail, the perception system 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

The system 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for enabling online perception performance evaluation of the vehicle 1 according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to obtain sensor data from a perception system of the vehicle 1 (referred to as ego-vehicle), where the sensor data comprises information about at least one object in the surrounding environment of the ego-vehicle. Further, the control circuitry 11 is configured to obtain communication data from an external vehicle located in the surrounding environment of the ego-vehicle, where the obtained communication data comprises at least one physical attribute of the external vehicle. The control circuitry 11 is further configured to compare the obtained at least one physical attribute of the external vehicle with the information about at least one object in order to find an object of the at least one object that matches the at least one physical attribute. Then, if a match for the at least one physical attribute is found the control circuitry 11 is configured to obtain world view data indicative of the world view of the external vehicle, form a common reference system between the ego-vehicle and the external vehicle, and compare the obtained sensor data with the world view data of the external vehicle in orderto evaluate a performance of the perception system of the ego-vehicle.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 13 may also provide the possibility to acquire sensor data directly or via dedicated sensor control circuitry 6 in the vehicle 1. The communication/antenna interface 14 may further provide the possibility to send output to a remote location (e.g. central fleet management system or to another vehicle) by means of the antenna 8. Moreover, some sensors in the vehicle may communicate with the control device 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data with the external vehicle's world view data in order to evaluate the performance of the ego-vehicle's perception system. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the world view data may be obtained together with the communication data comprising the one or more physical attributes of the external vehicle, as already exemplified, based on a specific realization. Moreover, the steps of obtaining data from the external vehicle and the transmission of data from the ego-vehicle may occur in at least partly in parallel depending on the applied communication protocol. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present disclosure. Other solutions, uses, objectives, and functions within the scope of the disclosure as claimed in the below described patent embodiments should be apparent for the person skilled in the art.

## Claims

1. A method for enabling online perception performance evaluation for an ego-vehicle, the method comprises:
obtaining sensor data from a perception system of the ego-vehicle, the sensor data comprising information about at least one object in the surrounding environment of the ego-vehicle;
obtaining communication data from an external vehicle in the surrounding environment of the ego-vehicle, the obtained communication data comprising at least one physical attribute of the external vehicle;
comparing the obtained at least one physical attribute of the external vehicle with the information about at least one object in order to find an object of the at least one object that matches the at least one physical attribute;
if a match for the at least one physical attribute is found:
obtaining world view data indicative of the world view of the external vehicle;
forming a common reference system between the ego-vehicle and the external vehicle, and comparing the obtained sensor data with the world view data of the external vehicle in order to evaluate a performance of the perception system of the ego-vehicle.

2. The method according to claim 1, wherein the obtained communication data further comprises the world view data.

3. The method according to claim 2, further comprising:
if no match for the at least one physical attribute is found:
comparing the obtained world view data of the external vehicle with the information about at least one object in order to establish at least a partial match between a world view of the ego-vehicle and the world view data of the external vehicle; and
if a partial match is established:
forming a common reference system between the ego-vehicle and the external vehicle, and comparing the obtained sensor data with the world view data of the external vehicle in order to evaluate a performance of the perception system of the ego-vehicle.

4. The method according to claim 3, further comprising:
sending data indicative of at least one physical attribute of the ego-vehicle to the external vehicle;
if no match for the at least one physical attribute is found, and if no partial match is established:
obtaining a confirmation signal from the external vehicle, the confirmation signal being indicative of an identification of the ego-vehicle by the external vehicle;
sending error data to a central entity, the error data being indicative of the obtained at least one physical attribute of the external vehicle, a geographical position of the ego-vehicle, and the sensor data of the ego-vehicle.

5. The method according to claim 1, wherein the step of obtaining world view data from the external vehicle comprises:
sending a request signal to the external vehicle, the request signal being indicative of a request for the world view data of the external vehicle;
receiving the world view data from the external vehicle after the request signal is sent.

6. The method according to any one of the preceding claims, wherein the step of comparing the obtained at least one physical attribute of the external vehicle with the information about at least one object comprises:
comparing the obtained at least one physical attribute of the external vehicle with the information about at least one object against a predefined confidence threshold; and
selecting the object of the at least one object having one or more physical attributes matching the obtained at least one physical attribute above the predefined confidence threshold.

7. The method according to any one of the preceding claims, further comprising:
sending data indicative of at least one physical attribute of the ego-vehicle to the external vehicle;
obtaining an external request signal from the external vehicle, the external request signal being indicative of a request to transmit the sensor data to the external vehicle;
sending the sensor data to the external vehicle after the external request signal is obtained.

8. The method according to any one of the preceding claims, wherein the at least one physical attribute of the external vehicle comprises at least one of a colour of the external vehicle, a maker of the external vehicle, a model of the external vehicle, a license plate of the external vehicle.

9. A computer-readable storage medium storing one or more programs configured to be executed by one or more processors of a vehicle control system, the one or more programs comprising instructions for performing the method according to any one of the preceding claims.

10. A system for enabling online perception performance evaluation for an ego-vehicle, the system comprising:
control circuitry configured to:
obtain sensor data from a perception system of the ego-vehicle, the sensor data comprising information about at least one object in the surrounding environment of the ego-vehicle;
obtain communication data from an external vehicle located in the surrounding environment of the ego-vehicle, the obtained communication data comprising at least one physical attribute of the external vehicle;
compare the obtained at least one physical attribute of the external vehicle with the information about at least one object in order to find an object of the at least one object that matches the at least one physical attribute;
if a match for the at least one physical attribute is found:
obtain world view data indicative of the world view of the external vehicle;
form a common reference system between the ego-vehicle and the external vehicle, and comparing the obtained sensor data with the world view data of the external vehicle in order to evaluate a performance of the perception system of the ego-vehicle.

11. The system according to claim 10, wherein the obtained communication data comprises the world view data.

12. The system according to claim 11, wherein the control circuitry is further configured to:
if no match for the at least one physical attribute is found:
compare the obtained world view data of the external vehicle with the information about at least one object in order to establish at least a partial match between a world view of the ego-vehicle and the world view data of the external vehicle; and
if a partial match is established:
form a common reference system between the ego-vehicle and the external vehicle, and comparing the obtained sensor data with the world view data of the external vehicle in order to evaluate a performance of the perception system of the ego-vehicle.

13. The system according to claim 12, wherein the control circuitry is further configured to:
send data indicative of at least one physical attribute of the ego-vehicle to the external vehicle;
if no match for the at least one physical attribute is found, and if no partial match is established:
obtain a confirmation signal from the external vehicle, the confirmation signal being indicative of an identification of the ego-vehicle by the external vehicle;
send error data to a central entity, the error data being indicative of the obtained at least one physical attribute of the external vehicle, a geographical position of the ego-vehicle, and the sensor data of the ego-vehicle.

14. The system according to claim 10, wherein the control circuitry is configured to obtain the world view data form the external vehicle by:
generating, at an output, a request signal to be sent to the external vehicle, the request signal being indicative of a request for the world view data of the external vehicle;
receiving, at an input, the world view data from the external vehicle after the request signal is sent.

15. A vehicle comprising:
a perception system comprising at least one sensor device for monitoring a surrounding environment of the vehicle;
a communication system for sending and receiving wireless data packets to and from an external transceiver via one or more antennas;
a system for enabling online perception performance evaluation according to any one of claims 10 - 14.
